# EUROPÄISCHE PATENTSCHRIFT

(11) **EP 0 846 068 B1**
(45) Veröffentlichungstag und Bekanntmachung des Hinweises auf die Patenterteilung: **29.09.1999**
(21) Anmeldenummer: 96914051.6
(22) Anmeldetag: 09.05.1996
(51) Int. Cl.: B60R 21/20

(54) **KUNSTSTOFFVERKLEIDUNG FÜR FAHRZEUGE MIT LUFTSACK UND VORRICHTUNG UND VERFAHREN ZU DEREN HERSTELLUNG**
PLASTICS COVERING FOR VEHICLE WITH AIRBAGS AND METHOD AND DEVICE FOR PRODUCING SAID COVERING
HABILLAGE EN MATIERE PLASTIQUE POUR VEHICULE EQUIPE DE COUSSINS GONFLABLES, AINSI QUE DISPOSITIF ET PROCEDE POUR SA FABRICATION

(30) Priorität: 14.07.1995 DE 29511172 U
(43) Veröffentlichungstag der Anmeldung: 10.06.1998
(73) Patentinhaber: PEGUFORM GMBH, 79268 Bötzingen (DE)
(72) Erfinder: JOHANNBÖKE, Eckhard, D-79346 Endingen (DE); GRÜNER, Engelbert, D-92339 Beilngries (DE); HÄRRINGER, Erwin, D-79369 Wyhl (DE)
(74) Vertreter: RACKETTE Partnerschaft Patentanwälte
(86) Internationale Anmeldenummer: DE9600785
(87) Internationale Veröffentlichungsnummer: WO9703866

(56) Entgegenhaltungen:
- EP-A- 0 363 986
- EP-A- 0 465 869
- EP-A- 0 495 188
- FR-A- 2 662 409
- GB-A- 2 244 239
- PATENT ABSTRACTS OF JAPAN vol. 14, no. 305 (M-0992), 29.Juni 1990 & JP,A,02 099324 (TOYOTA MOTOR CORP.), 11.April 1990,
- PATENT ABSTRACTS OF JAPAN vol. 14, no. 432 (M-1026), 17.September 1990 & JP,A,02 171362 (TAKATA K.K.), 3.Juli 1990,
- PATENT ABSTRACTS OF JAPAN vol. 16, no. 321 (M-1279), 14.Juli 1992 & JP,A,04 090942 (NIPPON PLAST CO LTD), 24.März 1992,
- PATENT ABSTRACTS OF JAPAN vol. 94, no. 010 & JP,A,06 285876 (INOAC CORP), 11.Oktober 1994,
- PATENT ABSTRACTS OF JAPAN vol. 16, no. 438 (M-1309), 11.September 1992 & JP,A,04 151345 (INOAC CORP.), 25.Mai 1992,

## Beschreibung

Die Erfindung betrifft eine Kunststoffverkleidung mit einer dem Fahrgastraum zugewandten, von einer Außenhaut gebildeten Sichtseite und einer der Sichtseite entgegengesetzten Innenseite sowie mit einem durch einen Luftsack aufsprengbaren Deckelbereich, der von einer Vielzahl von Schwachstellen gebildet ist, wobei wenigstens eine Schwachstelle zumindest abschnittsweise eine Vielzahl von scharfkantigen, von der Innenseite aus in die Kunststoffverkleidung eingebrachten Ausnehmungen aufweist.

Die Erfindung betrifft ferner ein Verfahren und eine Vorrichtung zur Herstellung einer Kunststoffverkleidung für mit einem Luftsack ausgestattete Fahrzeuge.

Eine derartige Kunststoffverkleidung ist aus der GB-A-2 244 239 bekannt. Die gattungsgemäße Kunststoffverkleidung verfügt über eine dem Fahrgastraum zugewandte, von einer weichen Außenhaut gebildete Sichtseite und eine der Sichtseite entgegengesetzten Innenseite sowie über einen durch einen Luftsack aufsprengbaren Deckelbereich, der von einer Vielzahl von Schwachstellen gebildet ist. Wenigstens eine Schwachstelle weist zumindest abschnittsweise eine Vielzahl von scharfkantigen, von der Innenseite aus in die Kunststoffverkleidung eingebrachte Ausnehmungen auf, die in eine an die Außenhaut angrenzende, innenseitige Trägerschicht eingebracht sind. Zwischen den sich in Längsrichtung parallel an der Sichtseite erstreckenden Böden der Ausnehmungen und der weichen Außenhaut ist eine Stützschicht aus einem harten Material angeordnet. In Längsrichtung sind zwischen den Ausnehmungen Stege mit einer gegenüber den Ausnehmungen geringeren Eindringtiefe in die Trägerschicht vorgesehen.

Durch das Einbringen der Abfolge von Ausnehmungen mit zwischenliegenden Stegen ist bei der vorbekannten Kunststoffverkleidung zwar eine vordefinierte Trennlinie geschaffen, die bei Entfalten des Luftsackes aufgrund der geringen Restdicke der Trägerschicht zu einem definierten Rißstart in diesem Bereich führt, allerdings weist sie den Nachteil auf, daß die von der Trägerschicht gestützte und damit an sich in vorteilhafter Weise den Deckelbereich nicht sichtbar werden lassende ungeschwächte Außenhaut bei der Expansion des Luftsackes zerrissen werden muß. Die zum Zerreißen der Außenhaut notwendigen Kräfte hängen dabei sehr stark von den äußeren Umgebungsbedingungen wie beispielsweise der Temperatur ab, so daß sich für diesen Bereich weniger definierte Entfaltungsbedingungen ergeben.

Aus Patent Abstracts of Japan, Vol. 16, No. 321 vom 14. Juli 1992 (JP-A-4 090 942) ist eine Kunststoffverkleidung bekannt, in der in einem Deckelbereich in einem Abdeckkörper eine H-förmige erste Reißnut und eine V-förmige zweite Reißnut vorgesehen sind, die rechtwinklig aufeinander stehen und einen großflächigen flachen Bodenbereich aufweisen. Zwischen Seitenwänden der ersten Nut sind Verbindungsabschnitte vorgesehen, die die erste Nut diskontinuierlich ausgestalten. Weiterhin sind zwischen den zweiten Nuten zweite dünne Abschnitte vorgesehen, die an die Verbindungsabschnitte angrenzen. Dadurch ist ein Aufblähen bei Einwirken eines sich expandierenden Luftsackes vermieden.

Aus Patent Abstracts of Japan, Vol. 14, No. 305 vom 29. Juni 1990 (JP-A-2 099 324) ist eine Kunststoffverkleidung mit einem durch eine Luftsack aufsprengbaren Deckelbereich bekannt, bei der von einer dem Fahrgastraum entgegengesetzten Innenseite im Stoßbereich zweier Abschnitte eines Trägers eine keilförmige Reißnut durch ein an den Träger angrenzendes Schaummaterial bis in eine eine Sichtseite bildende Außenhaut eingebracht ist Bei dieser Kunststoffverkleidung ist zwar durch die Materialschwächung der Außenhaut im Spitzenbereich der keilförmigen Reißnut eine verhältnismäßig definierte Rißbildung auch in der Außenhaut gewährleistet, allerdings besteht die Gefahr, daß sich der Verlauf des Deckelbereiches durch Einfallen der Außenhaut im Bereich der Reißnut in optisch nachteiliger Weise abzeichnet.

Eine weitere als Instrumententafel eines Motorfahrzeugs dienende Kunststoffverkleidung ist aus der EP 0 583 079 A1 bekannt. Diese Instrumententafel weist ein Trägermaterial auf, das auf der dem Fahrgastraum zugewandten Seite mit einer Beschichtung belegt ist. Im Bereich einer Luftsackeinrichtung mit einem sogenannten Airbag sind Reißnähte und Klappnuten in die Kunststoffverkleidung eingebracht. Die durch ein Aufblähen des Airbags aufsprengbaren Reißnuten bilden Klappen, die um die Klappnuten in Richtung des Fahrgastraumes ausklappbar sind, so daß sich der Airbag in den Fahrgastraum hinein ausdehnen kann.

Diese herkömmliche Instrumententafel wird durch Schaumformung hergestellt. Dabei werden die Reißnähte und Klappnuten durch in den Hohlraum der Schaumform vorstehende Erhebungen ausgebildet.

Bei der bekannten Instrumententafel besteht die Gefahr, daß beim Aufblähen des Airbags die Reißnähte nicht glatt, sondern unregelmäßig aufgesprengt werden. Dadurch können scharfkantige Bruchstücke und Splitter entstehen, die unter Umständen den Fahrgast und den Airbag verletzen.

Ein glattes Aufreißen der Reißnaht läßt sich im allgemeinen dadurch gewährleisten, daß die Kunststoffverkleidung im Bereich der Reißnähte durch eine Nut geschwächt ist, deren Tiefe nur geringfügig kleiner als die Dicke der Kunststoffverkleidung ist. Bereiche geringerer Materialstärke werden aber erfahrungsgemäß wegen der harten Umgebungsbedingungen, denen eine derartige Instrumententafel ausgesetzt ist, im Laufe der Zeit sichtbar. Eine auf der Sichtseite erkennbare Reißnaht erinnert den Fahrgast häufig auf unangenehme Weise an das Vorhandensein eines Airbags, und wird oft als unästhetisch empfunden.

Der Erfindung liegt die Aufgabe zugrunde, eine Kunststoffverkleidung der eingangs genannten Art zu schaffen, bei der sich der Deckelbereich auf der Sichtseite auch unter ungünstigen Umgebungsbedingungen nach langer Zeit nicht abzeichnet und bei der ein glattes Aufreißen durch den sich aufblähenden Luftsack ohne die Bildung von scharfkantigen Bruchstücken gewährleistet ist.

Weiterhin ist es Aufgabe der Erfindung, ein Verfahren und eine Vorrichtung zur Herstellung der Kunststoffverkleidung der eingangs genannten Art zu schaffen.

Die erstgenannte Aufgabe wird bei einer Kunststoffverkleidung der eingangs genannten Art dadurch gelöst, daß die Schwachstelle von der Innenseite aus in Richtung der Sichtseite in die Außenhaut eingebrachte, im Abstand zur Sichtseite endende, sich in Richtung der Sichtseite punktuell verengende Ausnehmungen aufweist, deren scharfkantigen Profile bei die Schwachstelle querenden Spannungslinien Spannungsspitzen dicht an der Sichtseite entlang der Schwachstelle verursachen.

Die zweitgenannte Aufgabe wird mit einem Verfahren der eingangs genannten Art dadurch gelöst, daß die Ausnehmungen durch eine scharfe Schneidekanten aufweisende Stechnadel in die Kunststoffverkleidung eingebracht werden.

Die zweitgenannte Aufgabe wird bei einer Vorrichtung der eingangs genannten Art dadurch gelöst, daß eine Nähvorrichtung mit einer scharfkantigen Stechnadel versehen ist, die gegenüber dem Gegenstand, in den die Schwachstellen bildenden Ausnehmungen einzubringen sind, bewegbar ist.

Durch die erfindungsgemäße Ausgestaltung der Kunststoffverkleidung ist die Restmaterialstärke der Außenhaut entlang der Schwachstelle größtenteils so groß, daß die Schwachstelle auch unter ungünstigen Umgebungsbedingungen über längere Zeit von der Sichtseite her nicht erkennbar ist, wobei weiterhin durch die scharfkantige Ausgestaltung der Ausnehmungen entlang der Schwachstelle dicht an der Sichtseite Spannungsspitzen auftreten, die zur Ausbildung von Mikrorissen führen. Die Mikrorissen breiten sich entlang der Schwachstelle aus und vereinen sich so zu einem glatten Riss der Schwachstelle unter definierten Kraftverhältnissen.

Dadurch, daß bei dem erfindungsgemäßen Verfahren sowie der erfindungsgemäßen Vorrichtung die Ausnehmungen mit einer scharfkantigen Stechnadel im gewünschten Abstand mit einer definierten Tiefe in die Kunststoffverkleidungen eingebracht werden, ist gewährleistet, daß die Ausnehmungen zur zuverlässigen Rißbildung ohne die Ausbildung von scharfkantigen Bruchstücken ausreichend scharfe Kanten aufweisen.

Nachfolgend werden weitere Merkmale und Vorteile der Erfindung anhand der Zeichnung beschrieben, wobei in Fig. 5, 10 und 11 Ausführungen gemäß Anspruch 1 dargestellt sind Es zeigen:
- Fig. 1: eine perspektivische Ansicht einer Kunststoffverkleidung mit gestrichelt angedeuteten Schwachstellen;
- Fig. 2: einen nicht maßstäblichen Querschnitt durch die Kunststoffverkleidung entlang der Schnittlinie II-II in Fig. 1;
- Fig. 3: einen vergrößerten Querschnitt durch eine die Schwachstelle bildende Reißnaht, die eine in eine Außenhaut der Kunststoffverkleidung eingebrachte Reißnut umfaßt;
- Fig. 4: eine Draufsicht auf eine mit einem Abdeckstreifen abgedeckte Reißnut;
- Fig. 5: eine vergrößerte Längsschnittansicht entlang der Reißnut;
- Fig. 6: eine vergrößerte Querschnittsansicht entlang der Schnittlinie VI-VI in Fig. 5;
- Fig. 7: einen nicht maßstäblichen Querschnitt durch ein weiteres Ausführungsbeispiel der Kunststoffverkleidung aus Fig. 1;
- Fig. 8: einen vergrößerten Ausschnitt aus dem Querschnitt in Fig. 7;
- Fig. 9: einen vergrößerten Ausschnitt aus einem Querschnitt durch ein weiteres Ausführungsbeispiel der Kunststoffverkleidung aus Fig. 1;
- Fig. 10: einen vergrößerten Längsschnitt durch in die Außenhaut der Kunststoffverkleidung eingebrachte Ausnehmungen;
- Fig. 11: einen vergrößerten Längsschnitt durch eine weitere abgewandelte Ausgestaltung der in die Außenhaut der Kunststoffverkleidung eingebrachten Ausnehmungen;
- Fig. 12: einen Querschnitt durch die Ausnehmungen in Fig. 11;
- Fig. 13: eine perspektivische Ansicht einer zur Herstellung der Kunststoffverkleidung verwendeten, abgewandelten Nähmaschine;
- Fig. 14: eine perspektivische Ansicht eines zur Herstellung der Kunststoffverkleidung verwendeten Knickarmroboters;
- Fig. 15: eine Seitenansicht einer zur Herstellung der Kunststoffverkleidung verwendeten Stechnadel;
- Fig. 16: einen Querschnitt durch die Stechnadel aus Fig. 15;
- Fig. 17: eine Seitenansicht auf ein weiteres Ausführungsbeispiel der Stechnadel; und
- Fig. 18: einen Querschnitt durch die Stechnadel aus Fig. 17.

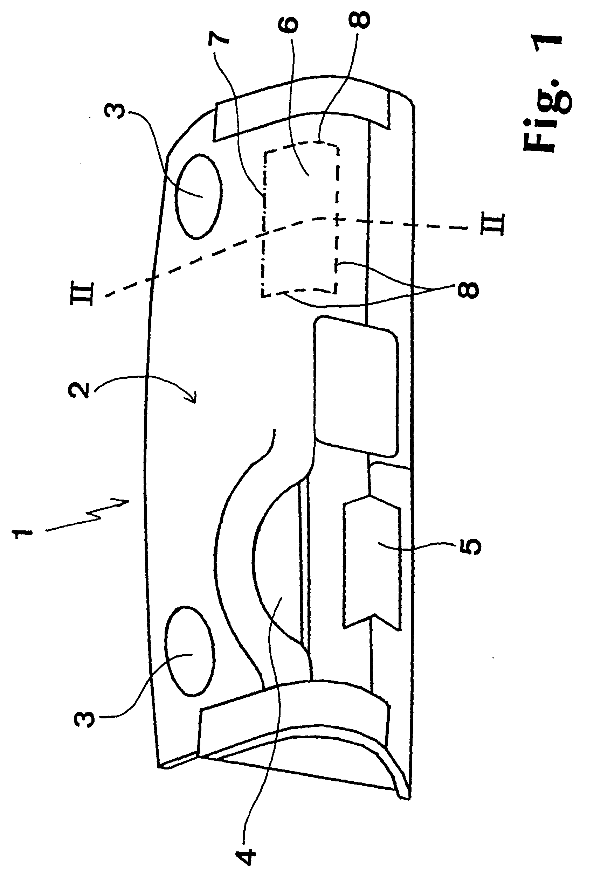

Fig. 1 zeigt eine perspektivische Ansicht einer Kunststoffverkleidung gemäß der Erfindung. Die Kunststoffverkleidung ist beispielsweise eine Instrumententafel 1 für Motorfahrzeuge mit einer dem Fahrgastraum zugewandten Sichtseite 2. In die Instrumententafel 1 sind Lüfteröffnungen 3, Ausnehmungen 4 für die vom Fahrer abzulesenden Instrumente sowie eine Öffnung 5 für die Lenkradsäule vorgesehen. Auf der Beifahrerseite der Instrumententafel 1 ist ein durch eine gestrichelte Linie angedeuteter Deckelbereich 6 vorgesehen, der durch einen Luftsack aufsprengbar ist. Der Deckelbereich 6 ist von einer gestrichelt angedeuteten Falznut 7, an die eine Reißnaht 8 anschließt, abgegrenzt.

Beim Aufblähen des Luftsacks reißt die Reißnaht 8 auf. Der Deckelbereich 6 klappt um die Falznut 7 in den Fahrgastraum auf und gestattet so dem Luftsack sich in den Fahrgastraum hinein auszudehnen.

Die Länge der Falznut 7 beträgt im allgemeinen zwei bis vier Dezimeter, während die Breite des Deckelbereichs 6 zwei bis drei Dezimeter beträgt.

Die den Deckel bereich 6 umfassende Luftsackeinrichtung muß hohen Anforderungen genügen. Das Aufreißen der Reißnaht 8 muß innerhalb von Millisekunden stattfinden. Zum Aufsprengen und Öffnen des Deckelbereichs 6 sind nur minimale Kräfte von wenigen 100 Newton zulässig. Um Verletzungen von Personen zu verhindern, dürfen beim Aufsprengen des Deckelbereichs 6 keine Bruchstücke entstehen, und der Deckelbereich 6 muß eine genau bestimmte Bewegung ausführen. Da das erkennbare Vorhandensein eines Luftsacks aus ästhetischen Gründen häufig als unangenehm empfunden wird, darf das Vorhandensein des Deckelbereichs 6 optisch nicht erkennbar sein. Gleichzeitig verlangen die Spezifikationen den Erhalt dieser Eigenschaften auch unter ungünstigen Umgebungsbedingungen über einen langen Zeitraum. Da die Instrumententafel 1 großen Temperaturschwankungen und starker UV-Strahlung ausgesetzt ist, darf auch bei Warmlagerung während 500 Stunden bei 120 Grad Celsius sowie nach Klimawechseltests und Sonnensimulationen keine Verschlechterung bezüglich der oben genannten Eigenschaften auftreten. Außerdem muß eine einwandfreie Funktion der Luftsackeinrichtung bei Umgebungstemperaturen zwischen - 40 Grad Celsius bis +80 Grad Celsius gewährleistet sein.

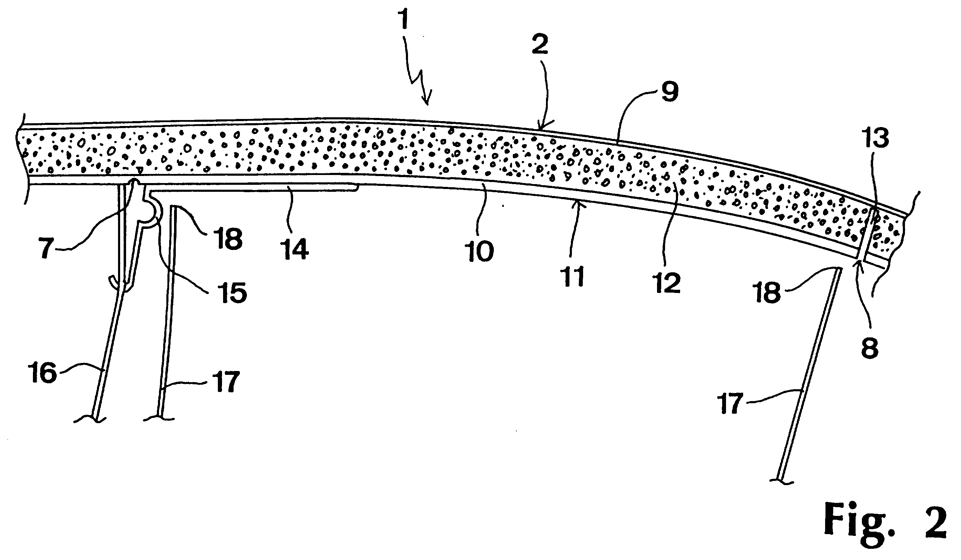

Fig. 2 zeigt einen Querschnitt entlang der Schnittlinie II-II in Fig. 1. In Fig. 2 ist die Dicke der Instrumententafel 1 stark übertrieben gezeichnet. Bei der Instrumententafel 1 aus Fig. 1 ist die Sichtseite 2 von einer Außenhaut 9 gebildet. Im Abstand parallel zur Außenhaut 9 verläuft ein Träger 10, der eine Innenseite 11 der Instrumententafel 1 bildet. In den Raum zwischen Außenhaut 9 und Träger 10 ist ein Schaummaterial 12 eingebracht, das Außenhaut 9 und Träger 10 miteinander fest verbindet und das der Instrumententafel 1 die nötige Festigkeit verleiht. Die den Deckelbereich 6 abgrenzende Reißnaht 8 umfaßt eine nutartige, in den Träger 10 und das Schaummaterial 12 eingebrachte Freimachung 13. Die Falznut 7, um die der Deckelbereich 6 aufklappbar ist, ist in den Träger 10 eingebracht. Auf der Innenseite 11 ist in der Nähe der Falznut 7 am Deckelbereich 6 eine Gelenkstrebe 14 angebracht, die über eine Dehnungsfalte 15 verfügt und die an einem mit der Karosserie des Motorfahrzeugs verbundenen Rahmen 16 befestigt ist.

Die Gelenkstrebe 14 lenkt den Deckel bereich 6, wenn der Luftsack die Reißnaht 8 aufsprengt. Durch Strecken der Dehnungsfalte 15 ist es dem Deckel bereich 6 möglich, beim Aufblähen des Luftsacks zunächst eine in den Fahrgastraum gerichtete Bewegung auszuführen. Dadurch erfolgt das Aufsprengen über die gesamte Länge der Reißnaht 8 im wesentlichen zur gleichen Zeit. Im Vergleich zu einer Vorrichtung, bei der die Gelenkstrebe 14 keine Dehnungsfalte 15 aufweist, erfolgt dadurch der Aufsprengvorgang wesentlich rascher.

Bei einer abgewandelten Ausgestaltung ist die Gelenkstrebe 14 durch einen Gurt aus einem Textilmaterial ersetzt.

Der Aufnahmeraum für den Luftsack ist von Führungsflächen 17 gebildet. Bei der Ausdehnung des Luftsacks lenken die Führungsflächen 17 den Luftsack gegen den Deckelbereich 6. Zweckmäßigerweise sind die der Innenseite 11 zugewandten Oberkanten 18 der Führungsflächen 17 bezüglich des Deckelbereichs 6 nach innen versetzt, um eine Beschädigung des Luftsacks während des Ausdehnvorgangs zu verhindern.

Die Außenhaut 9 ist bei diesem Ausführungsbeispiel aus Polyvinylchlorid im Rotationssinterverfahren hergestellt und ungefähr 1 bis 1,5 Millimeter dick, wohingegen der Träger 10 aus Polycarbonat, Acrylnitrilbutadienstyrol oder Polypropylen spritzgegossen ist und eine Dicke von etwa 2,5 Millimeter aufweist. Die Außenhaut 9 und der Träger 10 befinden sich in einem Abstand von 6 Millimeter. Das sich im Zwischenraum zwischen Außenhaut 9 und Träger 10 befindende Schaummaterial 12 ist Polyurethan.

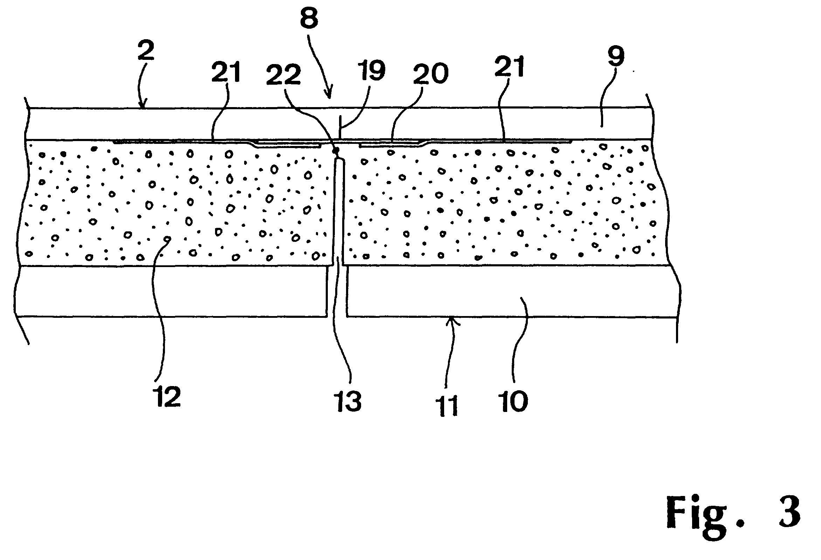

Fig. 3 zeigt einen vergrößerten Querschnitt durch die Reißnaht 8. In die Außenhaut 9 ist eine Reißnut 19 eingebracht, die von einem Abdeckstreifen 20 abgedeckt ist. Der Abdeckstreifen 20 ist aus Papier oder einem anderen porösen Material geringer Festigkeit, wie beispielsweise einem Schaumstoffmaterial oder geeignetem Folienmaterial hergestellt. Der Abdeckstreifen 20 ist von Haltestreifen 21 gehalten, die seitlich im Abstand zur Reißnut 19 verlaufen. Die Haltestreifen 21 bestehen aus dem gleichen Material wie die Außenhaut 9 und sind an der Außenhaut 9 durch Verschweißen oder Verkleben befestigt. Im Bereich der Reißnut 19 ist in das Schaummaterial 12 eine Freimachung 13 eingebracht. Bei dem in der Fig. 3 dargestellten Ausführungsbeispiel beträgt die Breite der Freimachung 13 im Träger 10 etwa ein Millimeter, während die Breite der Freimachung im Schaummaterial 12 kleiner als ein Millimeter ist. Die Breite der Reißnut 19 beträgt ungefähr 0,5 Millimeter. Die Freimachung 13 weist einen Boden 22 auf, der sich im Abstand von etwa einem Millimeter vom Abdeckstreifen 20 befindet. Die Freimachung 13 ist längs der Reißnaht 8 von Stegen unterbrochen, die den Deckelbereich 6 gegen ein unbeabsichtigtes Eindrücken sichern.

Der Abdeckstreifen 20 dient dazu, bei der Herstellung ein Verkleben der Reißnut 19 durch das Schaummaterial 12 zu verhindern. Gleichzeitig ist der Abdeckstreifen 20 porös und gestattet den Austausch von Stoffen zwischen Außenhaut 9 und Schaummaterial 12. Derartige Diffusionsprozesse führen im Laufe der Zeit zu optisch wahrnehmbaren Veränderungen auf der Sichtseite 2. Falls diese Diffusionsvorgänge an einer Stelle unterbunden sind, führt dies auf die Dauer zu einer Verfärbung oder Verformung auf der Sichtseite 2, und eine derartige Stelle wird sichtbar. Um die optische Gleichmäßigkeit der Sichtseite 2 zu erhalten, ist es deshalb notwendig, daß bezüglich der Diffusion entlang der Grenzfläche zwischen Außenhaut 9 und Schaummaterial 12 im wesentlichen die gleichen Bedingungen herrschen. Wegen der Durchlässigkeit des Abdeckstreifens 20, können die Diffusionsprozesse auch dann stattfinden, wenn der Abdeckstreifen 20 die Reißnut 19 abdeckt. Wegen der nötigen Gleichmäßigkeit der Bedingungen an der Grenzfläche bestehen außerdem die Haltestreifen 21 aus dem gleichen Kunststoffmaterial wie die Außenhaut 9. Damit ferner auf der gesamten Breite des Abdeckstreifens 20 das Schaummaterial 12 anliegt, erstreckt sich die freimachung 13 nicht bis zum Abdeckstreifen 20, sondern läuft in dem Boden 22 aus, der sich im Abstand zum Abdeckstreifen 20 befindet.

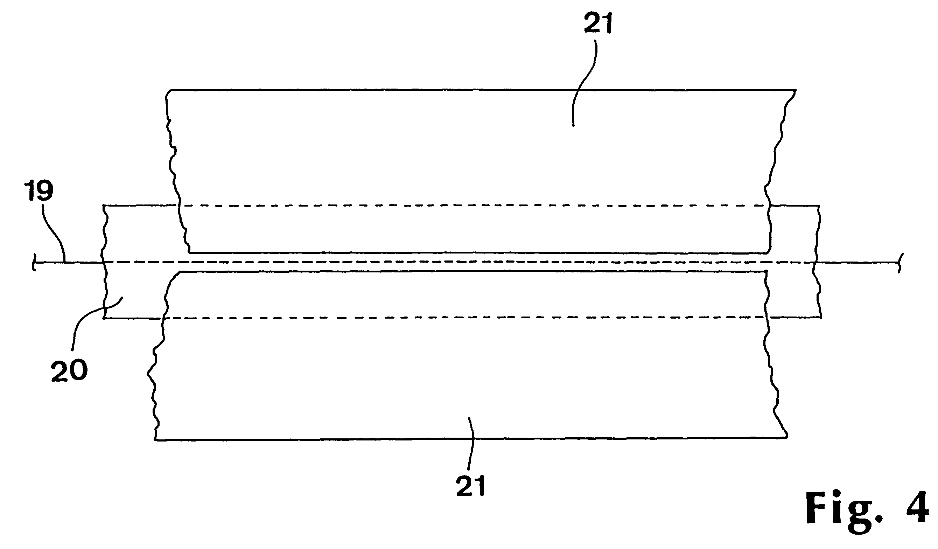

Fig. 4 zeigt eine Draufsicht auf die Reißnut 19 in Fig. 4. Man erkennt den die Reißnut 19 abdeckenden Abdeckstreifen 20, der von den beiden seitlich der Reißnut 19 verlaufenden Haltestreifen 21 gehalten ist. Die Haltestreifen 21 verstärken die Außenhaut 9 entlang der Reißnut 19 und gewährleisten, daß der sich beim Aufsprengen der Reißnut 19 im Abdeckstreifen 20 ausbildende Riß im Bereich der Reißnut 19 verläuft. Dadurch ist sichergestellt, daß die Reißnaht 8 glatt aufreißt.

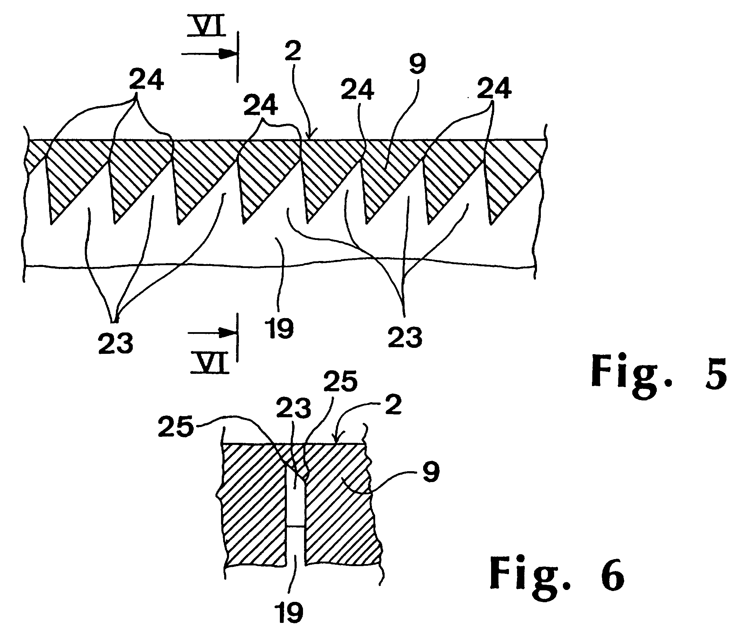

Fig. 5 zeigt eine Längsschnittansicht durch die Außenhaut 9 entlang der Reißnut 19. Die Reißnut 19 ist in Richtung der Sichtseite 2 durch sich in periodischen Abständen wiederholende, im Längsschnitt dreieckförmig Ausnehmungen 23 vertieft, die auf Spitzen 24 zulaufen.

Der periodische Abstand der Ausnehmungen 23 beträgt bei diesem Ausführungsbeispiel 1 bis 2,5 Millimeter. In den Eckbereich des Deckelbereichs 6 verringert sich der Abstand der Ausnehmungen 23 auf Werte kleiner als 1 Millimeter. Der Abstand zwischen der Sichtseite 2 und den Spitzen 24 der Ausnehmungen 23 beträgt bei diesem Ausführungsbeispiel etwa 0,4 bis 0,5 Millimeter.

Im Bereich der Reißnut 19 umfaßt die Außenhaut 9 folglich drei Zonen. Eine vollkommen ungeschwächte Zone bildet die Sichtseite 2. An die vollkommen ungeschwächte Zone schließt sich eine teilweise geschwächte an, die in eine vollkommen geschwächte übergeht.

Fig. 6 zeigt einen Querschnitt durch die Außenhaut 9 entlang der Schnittlinie VI-VI in Fig. 5. Man erkennt die zur Sichtseite 2 hin gleichbleibenden Breitenabmessungen der Ausnehmungen 23. Außerdem erkennt man, daß bei diesem bevorzugten Ausführungsbeispiel der schräg verlaufende Boden der Ausnehmungen 23 nicht von runden, sondern von scharfen Kanten 25 begrenzt ist. Diese scharfen Kanten 25 lassen sich auf einfache Weise mit Hilfe eines gezahnten und an den Zähnen angeschliffenen Formmessers, das zum Einstanzen der Reißnut 19 und der Ausnehmungen 23 verwendet wird, erzeugen. Zur Herstellung der Ausnehmungen 23 lassen sich aber auch mit Laserlicht arbeitende Fräsverfahren verwenden.

Durch die scharfen Kanten wird die Rißbildung erleichtert. Der sich aufblähende Luftsack wölbt zunächst den Deckelbereich 6 nach außen. Dabei wird die Reißnaht 8 einer quer zur Reißnaht 8 wirkenden Zugbelastung ausgesetzt. Die beim Aufsprengen des Deckelbereichs 6 auftretenden Spannungen konzentrieren sich bevorzugt an den scharfen Kanten 25. Dadurch wird die dem Aufreißen der Reißnut 19 vorhergehende Bildung von Mikrorissen begünstigt. Da die Spitzen 24 der Ausnehmungen 23 bis dicht an die Sichtseite 2 heranreichen, bilden sich im Bereich der Spitzen 24 der Ausnehmungen 23 dicht an der Sichtseite 2 Mikrorißzentren aus, die sich schließlich zu einem glatten Riß entlang der Reißnut 19 vereinen.

Da bei diesem Ausführungsbeispiel die Ausnehmungen 23 in den Spitzen 24 auslaufen, ist die Außenhaut 9 nur punktuell bis auf Bruchteile von Millimetern geschwächt. Über den Großteil der Reißnut 19 hinweg bleibt jedoch die Materialstärke der Außenhaut 9 groß. Dadurch ist gewährleistet, daß die Reißnut 19 auch über längere Zeit und unter ungünstigen Klimabedingungen und Einsatzbedingungen auf der Sichtseite 2 optisch nicht erkennbar ist.

Mit den dreieckförmigen Ausnehmungen 23 ergibt sich ein besonders glattes Aufreißen der Reißnut 19. Die Reißnut 19 muß jedoch nicht notwendigerweise durch die dreieckförmigen Ausnehmungen 23 vertieft sein. Auch anders gestaltete Ausnehmungen, zum Beispiel mit bogenförmigen Längsschnitten` kommen in Frage. Die Ausnehmungen 23 können sich darüberhinaus sowohl bezüglich des Längsschnitts als auch bezüglich des Querschnitts verengen. Daneben ist es möglich, die Ausnehmungen 23 punktuell durch die Außenhaut 9 hindurchtreten zu lassen. Zwar wird bei einem derartigen Ausführungsbeispiel die Reißnut 19 im Laufe der Zeit schneller sichtbar, aber dafür läßt sich der Deckelbereich 6 mit weniger Kraft aufsprengen.

Zur Herstellung der Instrumententafel wird zunächst die Außenhaut beispielsweise im Rotationssinterverfahren hergestellt. Eine andere Möglichkeit ist, die Außenhaut 9 durch Tiefziehen aus Folienhalbzeugen herzustellen. Um die scharfen Kanten 25 der Ausnehmungen 23 zu bewerkstelligen, wird bei einem Verfahren zu Herstellung der Reißnut 19 und der Ausnehmungen 23 ein Stanzmesser verwendet, mit dem die Reißnut 19 und Ausnehmungen 23 in die Außenhaut 9 eingestanzt werden. Auch eine der nachfolgend näher beschriebenen Stechnadeln läßt sich zu diesem Zweck verwenden. Daneben sind bei einem abgewandelten Verfahren die Ausnehmungen 23 mit Hilfe von Laserlicht in die Außenhaut 9 einbringbar. Nachdem die Ausnehmungen 23 in der Außenhaut 9 erstellt worden sind, wird die Reißnut 19 mit dem Abdeckstreifen 20 abgedeckt und die Haltestreifen 21 durch Kleben oder Verschweißen an der Außenhaut 9 angebracht. Anschließend wird die Außenhaut 9 zusammen mit dem im Spritzgußverfahren oder einem anderen herkömmlichen Verfahren hergestellten Träger 10 in eine Vorrichtung eingebracht, die die Außenhaut 9 und den Träger 10 parallel im Abstand zueinander hält. Mit Hilfe dieser Vorrichtung wird der Zwischenraum zwischen Außenhaut 9 und Träger 10 mit dem Schaummaterial 12 gefüllt. Zur Ausbildung der Freimachung 13 wird daraufhin mit einem Hochfrequenzmesser oder mit einer gewöhnlichen Fräs- oder Schneidevorrichtung oder mittels eines Lasers die Freimachung 13 in das Schaummaterial 12 und den Träger 10 eingebracht. Außerdem wird in den Träger 10 die Falznut 7 eingebracht und anschließend die Gelenkstreben 14 am Träger befestigt. Nach dem Abschluß dieser Arbeitsschritte ist die Instrumententafel 1 hinsichtlich des Deckelbereichs 6 zur Montage in die Karosserie eines Fahrzeuges bereit.

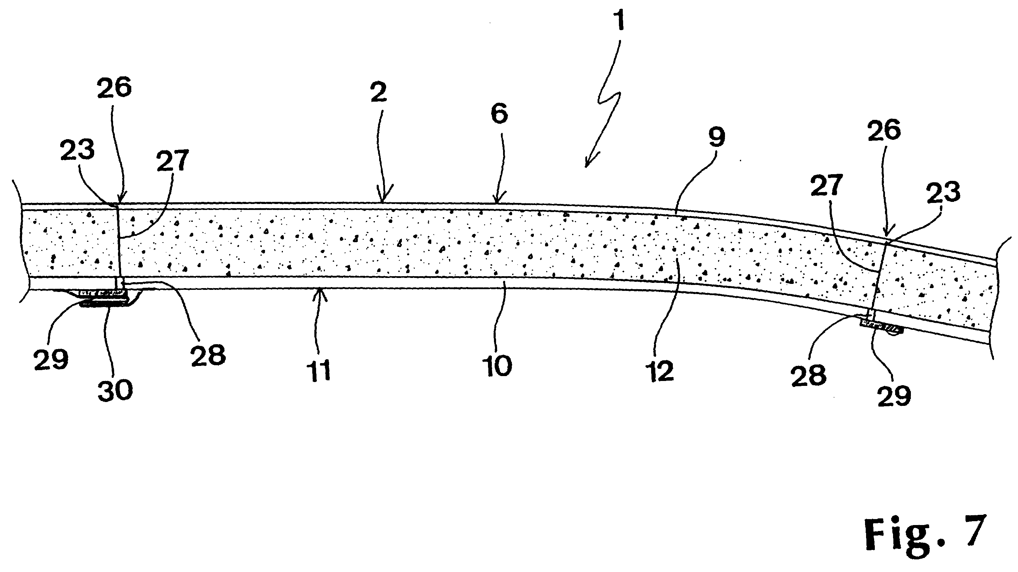

Fig. 7 ist ein nicht maßstäblicher Querschnitt durch ein abgewandeltes Ausführungsbeispiel der Instrumententafel 1 aus Fig. 1. Bei diesem Ausführungsbeispiel ist der Deckel bereich 6 durch eine umlaufende Reißnaht 26 abgegrenzt. Die Reißnaht 26 ist an mehreren Stellen von in der Zeichnung nicht dargestellten Stegen unterbrochen, die ein unbeabsichtigtes Ausbrechen des Deckelbereichs 6 verhindern. Die Reißnaht 26 umfaßt in die Außenhaut 9 der Instrumententafel 1 eingebrachte Ausnehmungen 23, an die sich eine durch einen Schnitt in das Schaummaterial 12 eingebrachte, durchgehende Freimachung 27 anschließt. Die Freimachung 27 geht im Bereich des Träger 10 in eine ausgefräste Aussparung 28 über. Auf der Innenseite 11 ist an der Instrumententafel 1 ein umlaufender Stützrahmen 29 angebracht, der den Deckel bereich 6 gegen ein unbeabsichtigtes Eindrücken sichert. Ferner ist ein aus einem Metallgeflecht hergestelltes Fangband 30 vorhanden. Das eine Ende des Fangbandes 30 ist an die Innenseite 11 des Deckelbereichs 6 und das andere Ende des Fangbandes 30 ist an die Innenseite 11 der Instrumententafel 1 außerhalb des Deckelbereichs 6 mit Hilfe eines Ultraschall-, Hochfrequenz- oder Wärmeverfahren angeschweißt.

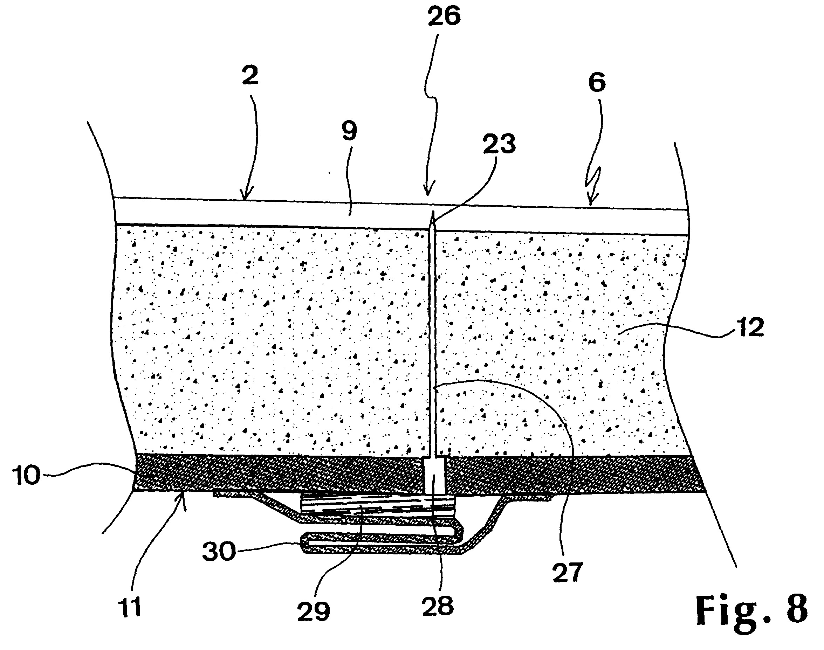

Fig. 8 zeigt einen vergrößerten Ausschnitt durch den Querschnitt in Fig. 7. Man erkennt deutlich die bei diesem Ausführungsbeispiel im Querschnitt spitz zulaufenden Ausnehmungen 23, die ohne Unterbrechung in die Freimachung 27 und die Aussparung 28 übergehen. Die Ausnehmungen 23 und die Freimachung 27 sind der Deutlichkeit halber in Fig. 8 mit großer Öffnungsweite dargestellt. Da jedoch die Außenhaut 9 ebenso wie das Schaummaterial 12 elastisch ist, schließen sich die Ausnehmungen 23 und die Freimachung 27 im allgemeinen wieder, nachdem sie mit Schnitt- oder Stechwerkzeugen hergestellt worden sind. Üblicherweise werden die Ausnehmungen 23 mit Hilfe von nachfolgend näher beschriebenen Stechnadeln und die Freimachung 27 mit Hilfe von Schnittwerkzeugen erstellt. Die Aussparung 28 im Träger 10 wird jedoch im üblicherweise ausgefräst.

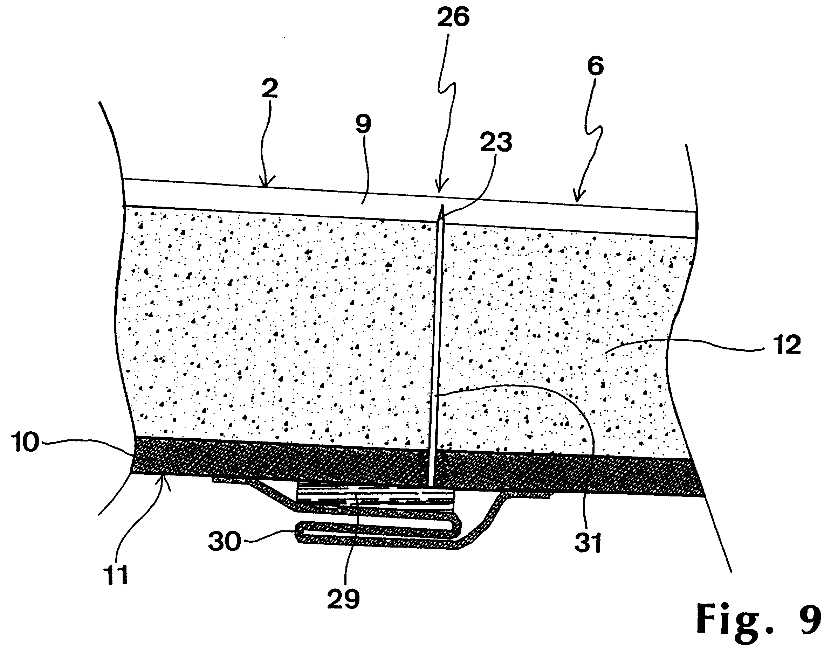

Fig. 9 zeigt ein weiteres abgewandeltes Ausführungsbeispiel der Instrumententafel 1 aus Fig. 7. Dieses Ausführungsbeispiel zeichnet sich dadurch aus, daß die Ausnehmungen 23 in der Außenhaut 9 eine Vielzahl von einzelnen Ausnehmungen 31 fortsetzen, die sich vom Träger 10 durch das Schaummaterial 12 bis zur Außenhaut 9 erstrecken. Die Ausnehmungen 23 und 31 werden durch Einstiche in die Instrumententafel 1 in einem Arbeitsgang erstellt, wodurch die Herstellung der Instrumententafel 1 wesentlich vereinfacht ist.

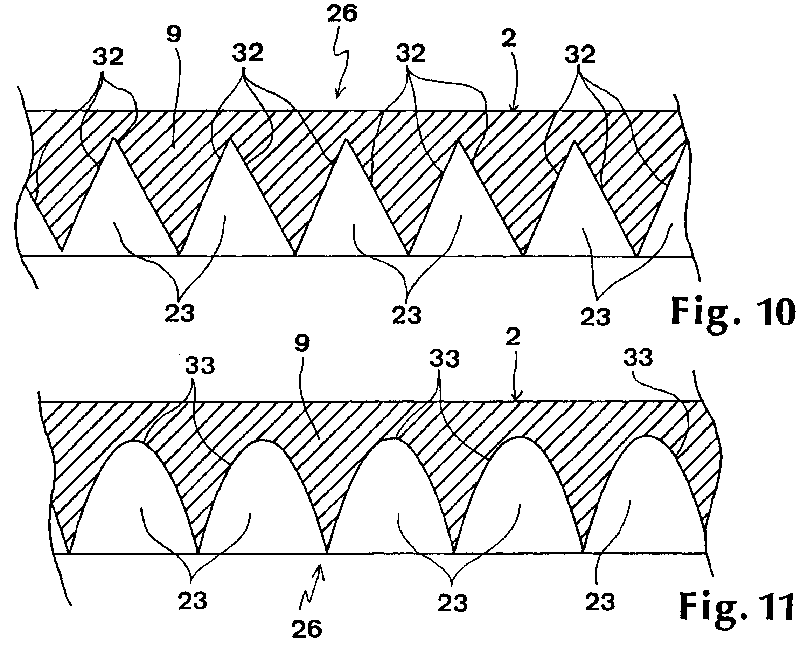

Fig. 10 zeigt einen Längsschnitt durch die Außenhaut 9 der in den Fig. 8 und 9 dargestellten Ausführungsbeispiele. Bei diesen Ausführungsbeispielen fehlt im Gegensatz zu dem in Fig. 5 dargestellten Ausführungsbeispiel die Reißnut 19, die die Außenhaut 9 zusätzlich schwächt. Die Ausnehmungen 23 verfügen jedoch wie bei dem in Fig. 5 dargestellten Ausführungsbeispiel über scharfe Kanten 32, an denen Spannungsspitzen auftreten, wenn die Reißnaht 26 einer Zugbelastung quer zur Reißnaht 26 unterworfen ist.

Fig. 11 schließlich zeigt einen Längsschnitt durch ein abgewandeltes Ausführungsbeispiel . Bei diesem Ausführungsbeispiel sind in die Außenhaut 9 bogenförmige Ausnehmungen 23 eingebracht. Mit Fig. 11 soll verdeutlicht werden, daß es für ein gutes Bruchverhalten weniger auf das jeweilige Längsprofil ankommt. Für ein gutes Bruchverhalten ist das Vorhandensein von scharfen Kanten wesentlich wichtiger. So verfügt das Ausführungsbeispiel in Fig. 11 wie die Ausführungsbeispiele in den Fig. 5 und 10 über scharfe Kanten 33, an denen Spannungsspitzen auftreten, wenn die Reißnaht 26 auf Zug belastet wird, so daß sich die die Reißnaht 26 durchquerenden Spannungslinien entlang den Kanten 33 konzentrieren.

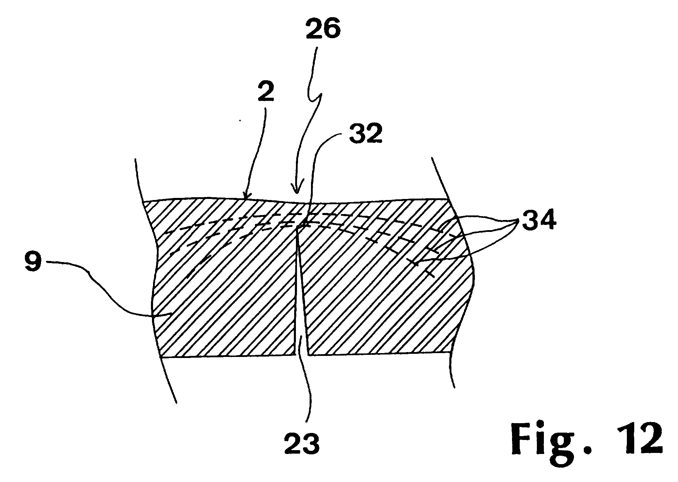

Fig. 12 zeigt ein Querschnittsprofil durch die Außenhaut 9 des in Fig. 10 dargestellten Ausführungsbeispiels. Die gestrichelten Linien deuten Spannungslinien 34 an, die sich im Bereich der Kanten 32 konzentrieren. Dadurch kommt es im Bereich der Kanten 32 zu Mikrorissen, die sich schließlich entlang der Reißnaht 26 zu einem durchgehenden Riß vereinen.

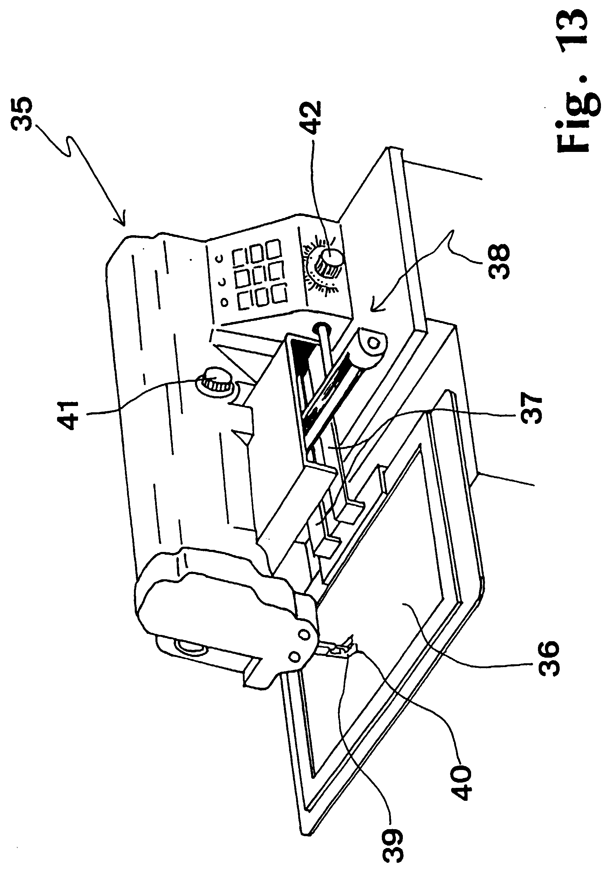

Fig. 13 stellt eine abgewandelte Nähvorrichtung 35 dar, mit der die Ausnehmungen 23 in die Außenhaut 9 einbringbar sind. Zu diesem Zweck wird die Außenhaut 9 auf einem X-Y-Tisch 36 festgespannt. Der X-Y-Tisch 36 ist über Streben 37 an einer in Fig. 13 nur teilweise dargestellten Antriebsmechanik 38 angebracht, mit der der X-Y-Tisch 36 in X- und Y-Richtung bewegbar ist. Ein Nähfuß 39 hält die Außenhaut 9 nieder, während eine Stechnadel 40 die Ausnehmungen 23 in die auf dem X-Y-Tisch eingespannte Außenhaut 9 einbringt. Die Einstichtiefe ist über einen Regelknopf 41 einstellbar. Ein weiterer Regelknopf 42 dient dazu, den Stichabstand festzulegen. Bei der Stechnadel 40 handelt es sich um eine angeschliffene, flache Nadel, die möglichst mit ihrer Flachseite parallel zu der zu erstellenden Reißnaht 8 oder 26 auszurichten ist. Aus diesem Grund ist bei einem abgewandelten, in der Zeichnung nicht dargestellten Ausführungsbeispiel der X-Y-Tisch um eine Z-Achse drehbar, um die Herstellung von gekrümmten Reißnähten 8 oder 26 zu ermöglichen.

Bei einem weiteren in der Zeichnung nicht dargestellten Ausführungsbeispiel ist die Stechnadel 40 je nach Arbeitsrichtung verschwenkbar, so daß die Flachseite stets parallel zur Reißnaht 8 oder 26 ausgerichtet ist.

Nach dem Erstellen der Ausnehmungen 23 in der Außenhaut 9, wird die Außenhaut 9 mit dem Träger 10 verschäumt und anschließend in das Schaummaterial 12 die Freimachung 13 oder 27 eingeschnitten sowie die Aussparungen 28 in dem Träger 10 ausgefräst.

Da sich mit der Nähvorrichtung 35 nur Gegenstände bearbeiten lassen, die auf dem X-Y-Tisch 36 flach aufliegen, eignet sich die Nähvorrichtung 35 nicht zur Herstellung des in Fig. 9 dargestellten Ausführungsbeispiels, da bei diesem Ausführungsbeispiel die Ausnehmungen 23 und 31 erst nach dem Verschäumen in die bereits ausgeformte Instrumententafel 1 eingebracht werden. Nach dem Verschäumen weist aber die Instrumententafel 1 bereits ihre endgültige Form auf und stellt somit keinen flachen Gegenstand dar.

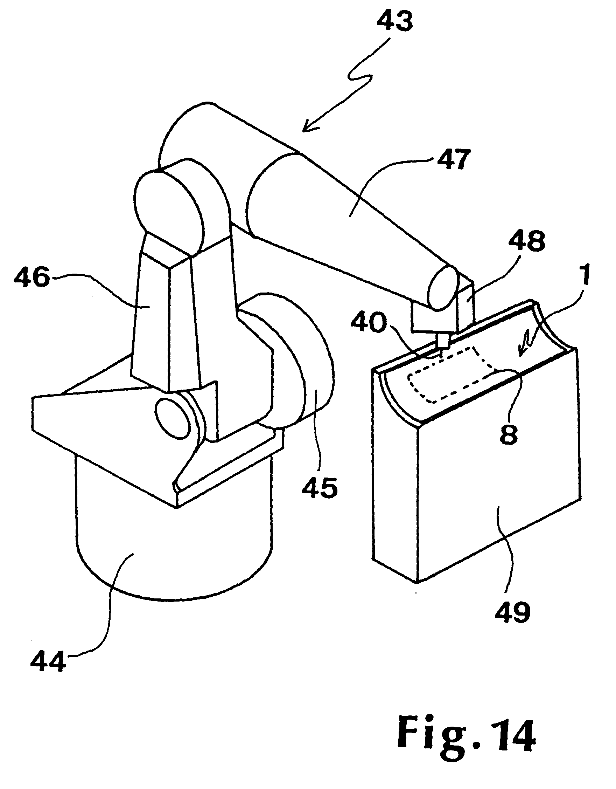

Fig. 14 zeigt ein Ausführungsbeispiel eines Knickarmroboters 43, der sich zum Bearbeiten der gewölbten Instrumententafeln 1 eignet. Der Knickarmroboter 43 verfügt über einen Standfuß 44, auf dem ein über eine Antriebsvorrichtung 45 betätigter Führungsarm 46 beweglich gelagert ist. Der Führungsarm 46 hält einen Arbeitsarm 47, der an seinem vorderen Ende über einen die Stechnadel 40 tragenden Nadelkopf 48 verfügt. Mit der Stechnadel 40 ist eine Instrumententafel 1 bearbeitbar, die über nicht dargestellte Anpreßvorrichtungen auf eine Halterung 49 gepreßt ist.

Da die Stechnadel 40 durch den Nadelkopf 48 in die unterschiedlichsten Raumlagen bezüglich der Instrumententafel 1 gebracht werden kann, können mit dem Knickarmroboter 43 die Ausnehmungen 31 des in der Fig. 9 dargestellten Ausführungsbeispiels auch nach dem Verschäumen der Außenhaut 9 mit dem Träger 10 in die fertige Instrumententafel 1 eingebracht werden.

Die Verwendung der Stechnadel 40 bei den in den Fig. 13 und 14 dargestellten Vorrichtungen hat den Vorteil, daß sich während der Fertigung der Kunststoffverkleidung 1 der Zustand der Stechnadel 40 leicht mit einer bildverarbeitenden Sicherheitsvorrichtung überwachen läßt.

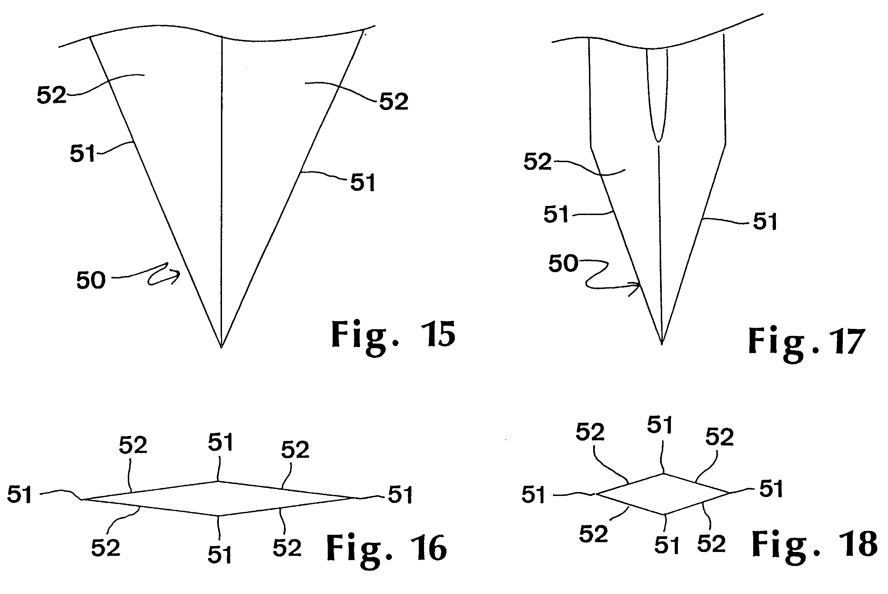

Fig. 15 schließlich zeigt eine Seitenansicht einer Nadelspitze 50 der Stechnadel 40. Die Nadelspitze 50 ist angeschliffen und weist Schneidekanten 51 sowie Schneideflächen 52 auf.

Fig. 16 zeigt ein Querschnittsprofil durch die Nadelspitze 50 in Fig. 15. Man erkennt das rautenartige, scharfkantige Profil der Nadelspitze 50. Beim Erstellen der Ausnehmungen 23 ist die Nadelspitze 50 so ausgerichtet, daß die Längsachse des Querschnittsprofils parallel zur Reißnaht 8 ausgerichtet ist.

Fig. 17 zeigt ein weiteres Ausführungsbeispiel einer Nadelspitze 50. Diese Nadelspitze ist in Richtung parallel zur Reißnaht 8 schmäler, aber dafür dicker bezüglich der Richtung quer zur Reißnaht 8. Folglich müssen mit der in Fig. 17 dargestellten Stechnadel 40 pro Längeneinheit eine größere Zahl von Einstichen ausgeführt werden. Aber dafür ist die Stechnadel 40 im Vergleich zu dem in Fig. 15 dargestellten Ausführungsbeispiel der Stechnadel 40 wesentlich robuster. Eine derartige Nadel eignet sich auch zum Einsatz im Knickarmroboter 43, um in das in Fig. 9 dargestellte Ausführungsbeispiel der Instrumententafel 1 die Ausnehmungen 23 und 31 einzubringen.

Abschließend sei angemerkt, daß zum Erstellen der Ausnehmungen 31 in der fertigen Instrumententafel 1 auch eine Vorrichtung denkbar ist, bei der die Stechnadeln 40 zunächst als Bohrer dienen, um an der fertigen Instrumententafel 1 zunächst den Träger 10 zu durchbohren. Anschließend werden bei einer derartigen Vorrichtung die Stechnadeln 40 angehalten, die Stechnadeln 40 mit ihrer Flachseite parallel zur Reißnaht 8 ausgerichtet und die Ausnehmungen 23 in der Außenhaut 9 erstellt.

## Patentansprüche

1. Kunststoffverkleidung mit einer dem Fahrgastraum zugewandten, von einer Außenhaut (9) gebildeten Sichtseite (2) und einer der Sichtseite (2) entgegengesetzten Innenseite (11) sowie mit einem durch einen Luftsack aufsprengbaren Deckelbereich (6), der von einer Vielzahl von Schwachstellen (7, 8, 26) gebildet ist, wobei wenigstens eine Schwachstelle (8, 26) zumindest abschnittsweise eine Vielzahl von scharfkantigen, von der Innenseite (11) aus in die Kunststoffverkleidung eingebrachten Ausnehmungen (23) aufweist, **dadurch gekennzeichnet**, daß die Schwachstelle (8, 26) von der Innenseite (11) aus in Richtung der Sichtseite (2) in die Außenhaut (9) eingebrachte, im Abstand zur Sichtseite (2) endende, sich in Richtung der Sichtseite (2) punktuell verengende Ausnehmungen (23) aufweist, deren scharfkantigen Profile bei die Schwachstelle (8, 26) querenden Spannungslinien Spannungsspitzen dicht an der Sichtseite (2) entlang der Schwachstelle (8, 26) verursachen.

2. Kunststoffverkleidung nach Anspruch 1, dadurch gekennzeichnet, daß die Schwachstelle (8, 26) eine Reißnut (19) umfaßt, die durch die Ausnehmungen (23) weiter vertieft ist.

3. Kunststoffverkleidung nach Anspruch 1 oder 2, dadurch gekennzeichnet, daß sich die Längenabmessungen der Ausnehmungen (23) entlang der Schwachstelle (8, 26) zur Sichtseite (2) hin verringern und die Breitenabmessungen der Ausnehmungen (23) quer zur Schwachstelle (8, 26) gleichbleiben.

4. Kunststoffverkleidung nach Anspruch 1 oder 2, dadurch gekennzeichnet, daß die Längenabmessungen der Ausnehmungen (23) entlang der Schwachstelle (8, 26) gleichbleiben und daß sich die Breitenabmessungen quer zur Schwachstelle (8, 26) verringern.

5. Kunststoffverkleidung nach Anspruch 1 oder 2, dadurch gekennzeichnet, daß sich sowohl die Längenabmessungen der Ausnehmungen (23) entlang der Schwachstelle (8, 26) als auch die Querabmessungen der Ausnehmungen (23) quer zur Schwachstelle (8, 26) auf die Sichtseite (2) verringern.

6. Kunststoffverkleidung nach einem der vorstehenden Ansprüche, dadurch gekennzeichnet, daß die Kunststoffverkleidung einen die Innenseite (11) bildenden Träger (10) aufweist, wobei zwischen Außenhaut (9) und Träger (10) ein Schaummaterial (12) eingebracht ist.

7. Kunststoffverkleidung nach Anspruch 6, dadurch gekennzeichnet, daß die den Deckelbereich (6) bildenden Schwachstellen eine im Träger (10) eingebrachte Falznut (7) und eine sich daran anschließende Reißnaht (8) umfassen, wobei der Deckelbereich (6) entlang der Reißnaht (8) aufsprengbar und entlang der Falznut (7) ausschwenkbar ist.

8. Kunststoffverkleidung nach Anspruch 6, dadurch gekennzeichnet, daß der Deckelbereich (6) von einer umlaufenden Reißnaht (26) gebildet ist.

9. Kunststoffverkleidung nach Anspruch 7 oder 8, dadurch gekennzeichnet, daß die Reißnaht (8, 26) von einer Vielzahl von in periodischen Abständen in die Kunststoffverkleidung eingebrachten und sich von der Innenseite (11) der Kunststoffverkleidung bis in die Außenhaut (9) erstreckenden Ausnehmungen (31, 23) gebildet ist.

10. Kunststoffverkleidung nach Anspruch 7 oder 8, dadurch gekennzeichnet, daß die Reißnaht (8, 26) eine in die Außenhaut (9) von der Außenseite her eingebrachte, durchgehende Reißnut (19) aufweist, die durch die in periodischen Abständen in die Außenhaut (9) eingebrachten und im Längsschnitt entlang der Reißnut (19) dreieckförmigen Vertiefungen (23), die in Spitzen (24) auslaufen, weiter vertieft ist.

11. Kunststoffverkleidung nach Anspruch 10, dadurch gekennzeichnet, daß sich an die Reißnut (19) eine sich durch das Schaummaterial (12) bis zur Innenseite (11) erstreckende Freimachung (27) anschließt.

12. Kunststoffverkleidung nach Anspruch 10, dadurch gekennzeichnet, daß die Reißnut (19) durch wenigstens einen Abdeckstreifen (20) abgedeckt ist, der von an der Außenhaut (9) längs der Reißnut (19) befestigten Haltestreifen (21) gehalten ist.

13. Kunststoffverkleidung nach Anspruch 12, dadurch gekennzeichnet, daß das Schaummaterial (12) und der Träger (10) im Bereich der Reißnut (19) durch eine Freimachung (13) geschwächt sind, deren Boden (22) sich im Abstand zum Abdeckstreifen (20) befindet.

14. Kunststoffverkleidung nach einem der vorstehenden Ansprüche, dadurch gekennzeichnet, daß der Deckelbereich (6) durch wenigstens ein auf der Innenseite (11) des Deckelbereichs (6) angebrachtes Zurückhaltemittel (14, 15, 16, 30) gegen ein Wegschleudern in den Fahrgastraum gesichert ist.

15. Verfahren zur Herstellung einer Kunststoffverkleidung nach Anspruch 1, dadurch gekennzeichnet, daß die Ausnehmungen (23, 31) durch eine scharfe Schneidekanten aufweisende Stechnadel (40) in die Kunststoffverkleidung eingebracht werden.

16. Verfahren nach Anspruch 15, dadurch gekennzeichnet, daß zunächst in die Außenhaut (9) die Ausnehmungen (23) eingebracht werden, die nachfolgend durch Abdeckstreifen (20) abgedeckt werden, woraufhin die Außenhaut (9) mit einem Träger (10) verschäumt wird.

17. Verfahren nach Anspruch 15, dadurch gekennzeichnet, daß zunächst die Ausnehmungen (23) in die Außenhaut (9) eingebracht werden, anschließend die Außenhaut (9) mit dem Träger (10) verschäumt wird und in das Schaummaterial (12) und den Träger (10) eine an die Ausnehmungen (23) anschließende Freimachung (27) eingebracht wird.

18. Verfahren nach Anspruch 15, dadurch gekennzeichnet, daß zunächst die Außenhaut (9) mit dem Träger (10) verschäumt wird und anschließend die Ausnehmungen (23, 31) in die Instrumententafel eingebracht werden.

19. Vorrichtung zur Herstellung einer Kunststoffverkleidung nach Anspruch 1, dadurch gekennzeichnet, daß eine Nähvorrichtung (35) mit einer scharfkantigen Stechnadel (40) versehen ist, die gegenüber dem Gegenstand (1, 9), in den die Schwachstellen (8, 26) bildenden Ausnehmungen (23, 31) einzubringen sind, bewegbar ist.

20. Vorrichtung nach Anspruch 19, dadurch gekennzeichnet, daß die Stechnadel eine spitz zulaufende, flache Stechnadel (40) mit rautenförmigem Querschnittsprofil ist.

## Claims

1. A plastics covering having a visible side (2) which faces towards the passenger compartment and which is formed by an outer skin (9) and an inner side (11) opposite to the visible side (2), and having a cover region (6) which can be burst open by an airbag and which is formed by a plurality of weak locations (7, 8, 26), wherein at least one weak location (8, 26) has at least in a portion-wise manner a plurality of sharp-edged recesses (23) which are formed in the plastics covering from the inner side (11), characterised in that the weak location (8, 26) has recesses (23) which are formed in the outer skin (9) from the inner side (11) in the direction of the visible side (2) and which terminate at a spacing relative to the visible side (2) and which narrow in point-wise fashion in the direction of the visible side (2) and whose sharp-edged profiles at stress lines crossing the weak location (8, 26) cause stress peaks close to the visible side (2) along the weak location (8, 26).

2. A plastics covering according to claim 1 characterised in that the weak location (8, 26) includes a tearing groove (19) which is further deepened by the recesses (23).

3. A plastics covering according to claim 1 or claim 2 characterised in that the longitudinal dimensions of the recesses (23) decrease along the weak location (8, 26) towards the visible side (2) and the width dimensions of the recesses (23) remain the same transversely with respect to the weak location (8, 26).

4. A plastics covering according to claim 1 or claim 2 characterised in that the longitudinal dimensions of the recesses (23) remain the same along the weak location (8, 26) and that the width dimensions decrease transversely with respect to the weak location (8, 26).

5. A plastics covering according to claim 1 or claim 2 characterised in that both the longitudinal dimensions of the recesses (23) along the weak location (8, 26) and also the transverse dimensions of the recesses (23) transversely with respect to the weak location (8, 26) decrease towards the visible side (2).

6. A plastics covering according to one of the preceding claims characterised in that the plastics covering has a carrier (10) forming the inner side (11), wherein a foam material (12) is disposed between the outer skin (9) and the carrier (10).

7. A plastics covering according to claim 6 characterised in that the weak locations forming the cover region (6) include a folding groove (7) disposed in the carrier (10) and a tearing seam (8) adjoining the folding groove, wherein the cover region (6) can be burst open along the tearing seam (8) and can be pivoted out along the folding groove (7).

8. A plastics covering according to claim 6 characterised in that the cover region (6) is formed by a peripherally extending tearing seam (26).

9. A plastics covering according to claim 7 or claim 8 characterised in that the tearing seam (8, 26) is formed by a plurality of recesses (31, 23) which are formed in the plastics covering at periodic spacings and which extend from the inner side (11) of the plastics covering into the outer skin (9).

10. A plastics covering according to claim 7 or claim 8 characterised in that the tearing seam (8, 26) has a continuous tearing groove (19) which is formed in the outer skin (9) from the outward side and which is further deepened by the depressions (23) which are formed in the outer skin (9) at periodic spacings and which are triangular in longitudinal section along the tearing groove (19) and which terminate in points (24).

11. A plastics covering according to claim 10 characterised in that adjoining the tearing groove (19) is an opening (27) which extends through the foam material (12) to the inner side (11).

12. A plastics covering according to claim 10 characterised in that the tearing groove (19) is covered by at least one cover strip (20) which is held by holding strips (21) secured to the outer skin (9) along the tearing groove (19).

13. A plastics covering according to claim 12 characterised in that the foam material (12) and the carrier (10) are weakened in the region of the tearing groove (19) by an opening (13) whose bottom (22) is disposed at a spacing relative to the cover strip (20).

14. A plastics covering according to one of the preceding claims characterised in that the cover region (6) is secured against being launched away into the passenger compartment by at least one retention means (14, 15, 16, 30) disposed on the inner side (11) of the cover region (6).

15. A method of producing a plastics covering according to claim 1 characterised in that the recesses (23, 31) are produced in the plastics covering by a piercing needle (40) having sharp cutting edges.

16. A method according to claim 15 characterised in that the recesses (23) are firstly produced in the outer skin (9) and are subsequently covered over by cover strips (20) whereupon the outer skin (9) is foamed to a carrier (10).

17. A method according to claim 15 characterised in that firstly the recesses (23) are produced in the outer skin (9), then the outer skin (9) is foamed to the carrier (10) and an opening (27) adjoining the recesses (23) is produced in the foam material (12) and the carrier (10).

18. A method according to claim 15 characterised in that firstly the outer skin (9) is foamed to the carrier (10) and then the recesses (23, 31) are produced in the instrument panel.

19. A device for producing a plastics covering according to claim 1 characterised in that there is provided a sewing apparatus (35) having a sharp-edged piercing needle (40) which is movable with respect to the article (1, 9) in which the recesses (23, 31) forming weak locations (8, 26) are to be produced.

20. A device according to claim 19 characterised in that the piercing needle is a flat piercing needle (40) which converges to a point and of rhomboidal cross-sectional profile.

## Revendications

1. Habillage en matière plastique comportant une face visible (2) tournée vers l'habitacle, constituée par une peau extérieure (9), et une face intérieure (11), opposée à la face visible (2) et présentant une zone formant couvercle (6) pouvant être ouverte par éclatement, au moyen d'un coussin gonflable, constituée d'une pluralité de points faibles (7, 8, 26), habillage présentant au moins un point faible (8, 26) présentant, au moins par tronçons, une pluralité d'évidements (23) à angles vifs, ménagés dans l'habillage en matière plastique en partant de la face intérieure (11), caractérisé en ce que le point faible (8, 26) présente depuis la face intérieure (11), dans la direction de la face visible (2), des évidements (23) ménagés dans la peau extérieure (9), s'achevant à distance de la face visible (2), allant en se rétrécissant dans la direction de la face visible (2), pour finir en points, dont les profils à arêtes vives forment, au niveau des lignes de contrainte croisant le point faible (8, 26), des pics de contrainte, près de la face visible, le long du point faible (8, 26).

2. Habillage en matière plastique selon la revendication 1, caractérisé en ce que le point faible (8, 26) comprend une rainure de déchirement (19) imprimée plus profondément au moyen des évidements (23).

3. Habillage en matière plastique selon la revendication 1 ou 2, caractérisé en ce que les dimensions longitudinales des éléments (23) ménagés le long du point faible (8, 26) vont en diminuant vers la face visible (2), les dimensions en largeur des éléments (23) restant identiques dans les directions transversales par rapport au point faible (8, 26).

4. Habillage en matière plastique selon la revendication 1 ou 2, caractérisé en ce que les dimensions longitudinales des évidements (23) ménagés le long du point faible (8, 26) restent constantes et les dimensions en largeur vont en diminuant dans la direction transversale à celle du point faible (8, 26).

5. Habillage en matière plastique selon la revendication 1 ou 2, caractérisé en ce que tant les dimensions longitudinales des éléments (23) le long du point faible (8, 26) que les dimensions transversales des évidements (23), transversalement au point faible (8, 26), vont en diminuant vers la face visible (2).

6. Habillage en matière plastique selon l'une des revendications précédentes, caractérisé en ce que l'habillage en matière plastique présente un support (10) constituant la face intérieure (11), un matériau alvéolaire (12) étant logé entre la peau extérieure (9) et le support (10).

7. Habillage en matière plastique selon la revendication 6, caractérisé en ce que les points faibles, constituant la zone formant couvercle (6), comprennent une rainure de pliage (7), ménagée dans le support (11), et une couture ou cordon de déchirement (8) s'y raccordant, la zone formant couvercle (6) pouvant être ouverte par éclatement le long de la couture ou cordon de déchirement (8) et pouvant être ouverte par pivotement le long de la rainure de pliage (7).

8. Habillage en matière plastique selon la revendication 6, caractérisé en ce que la zone formant couvercle (6) est constituée par une couture ou un cordon périmétrique de déchirement (26).

9. Habillage en matière plastique selon la revendication 7 ou 8, caractérisé en ce que le cordon ou la couture de déchirement (8, 26) est constitué(e) par une pluralité d'évidements (31, 23), ménagés selon des espacements périodiques dans l'habillage en matière plastique et s'étendant de la face intérieure (11) de l'habillage en matière plastique jusqu'à la peau extérieure (9).

10. Habillage en matière plastique selon la revendication 7 ou 8, caractérisé en ce que le cordon ou la couture de déchirement (8, 26) présente une rainure de déchirement (19) continue, ménagée dans la peau extérieure (9) depuis la face extérieure, rainure qui est creusée plus profondément au moyen des cavités triangulaires (23), évoluant en formant des pointes (24), ménagées suivant des espacements périodiques dans la peau extérieure (9) et s'étendant en coupe longitudinale en suivant la rainure de déchirement (19).

11. Habillage en matière plastique selon la revendication 10, caractérisé en ce qu'un dégagement (27), s'étendant à travers le matériau alvéolaire (12) jusqu'à la face intérieure (11), se raccorde à la rainure de déchirement (19).

12. Habillage en matière plastique selon la revendication 10, caractérisé en ce que la rainure de déchirement (19) est couverte par au moins une bande de couverture (20) maintenue par des bandes de maintien (21) fixées à la peau extérieure (9), le long de la rainure de déchirement (19).

13. Habillage en matière plastique selon la revendication 12, caractérisé en ce que le matériau alvéolaire (12) et Te support (10) sont affaiblis par un dégagement (13) ménagé dans la zone de la rainure de déchirement (19), dégagement dont le fond (22) se trouve à distance de la bande de recouvrement (20).

14. Habillage en matière plastique selon l'une des revendications précédentes, caractérisé en ce que la zone formant couvercle (6) est assurée contre toute éjection dans l'habitacle, à l'aide d'au moins un moyen de retenue (14, 15, 16, 30) monté sur la face intérieure (11) de la zone formant couvercle (6).

15. Procédé de fabrication d'un habillage en matière plastique selon la revendication 1, caractérisé en ce que les éléments (23, 31) sont ménagés dans l'habillage en matière plastique au moyen d'une aiguille de piquage (40) présentant des arêtes vives de coupe.

16. Procédé selon la revendication 15, caractérisé en ce que d'abord les éléments (23) sont ménagés dans la peau extérieure (9) et sont ensuite recouverts par des bandes de recouvrement (20), puis la peau extérieure (9) est rendue alvéolaire et dotée d'un support (10).

17. Procédé selon la revendication 15, caractérisé en ce que d'abord les éléments (23) sont ménagés dans la peau extérieure (9), puis la peau extérieure (9) est rendue alvéolaire et dotée du support (10), et dans le matériau alvéolaire (12) et le support (10) est ménagé un dégagement (27) se raccordant aux éléments (23).

18. Procédé selon la revendication 15, caractérisé en ce que, d'abord, la peau extérieure (9) et son support (10) sont rendues alvéolaires, et ensuite les évidements (23, 31) sont ménagés dans le tableau de bord.

19. Dispositif de fabrication d'un habillage en matière plastique selon la revendication 1, caractérisé en ce qu'un dispositif de couture (35) est doté d'une aiguille de piquage (40) à arêtes vives, déplaçable par rapport à l'objet (1, 9), dans les éléments (23, 31) constituant les points faibles (8, 26).

20. Dispositif selon la revendication 19, caractérisé en ce que l'aiguille de piquage est une aiguille de piquage (40) plate, se terminant en une pointe, à section transversale de profil en forme de losange.
